# EUROPEAN PATENT APPLICATION

(11) **EP 4 752 181 A1**
(43) Date of publication of application: **03.06.2026**
(21) Application number: 24216202.2
(22) Date of filing: 28.11.2024
(51) Int. Cl.: C09D 101/04, D21H 11/18, D21H 17/25, D21H 27/10

(54) **APPLICATION OF A SKIN TIGHT PAPER LIKE COATING**

(71) Applicant: Eclosion AB, 118 47 Stockholm (SE)
(72) Inventor: Sandquist, David, 191 50 Sollentuna (SE); Brechensbauer, Axel, 214 33 Malmö (SE); Tingvall, Liselotte, 118 51 Stockholm (SE); Thome, Hajar, 167 44 Bromma (SE); Stenmark, Kim Onchoi, 126 42 Hägersten (SE); Gardien, Kinge, 75327 Uppsala (SE); Eklund, Linn, 263 94 Mjöhult (SE)
(74) Representative: Santarelli

(57) **Abstract**

The present invention relates generally to packaging and coating materials and, more specifically, to a composition comprising a nanocellulose material, its use as a coating and a process for coating a surface with said composition. The composition of the present invention comprises a nanocellulose material, a cellulose pulp fiber having an average fiber length less than 2 mm, and water.

## Description

### Technical field

The present invention relates generally to packaging materials and, more specifically, to a composition comprising a nanocellulose material, its use as a coating and a process for coating a surface with said composition.

### Background

Most conventional packaging materials are made with plastic material which, although providing desirable physical properties such as strength and flexibility, pose significant environmental concerns.

Indeed, a substantial portion of plastics used in packaging is not recycled and ends up in landfills, the natural environment, or the oceans. Plastics can take hundreds of years to decompose, releasing toxic substances and continuing to pollute the environment during this time. This has a damaging impact on marine life since marine animals may ingest plastic debris or become entangled in it, which can lead to severe injuries or death. Microplastics, which result from the breakdown of larger plastic items, can be absorbed by plankton and enter the food chain, affecting the marine ecosystem.

In addition, the manufacturing process and incineration of plastic packaging generates emissions of carbon dioxide (CO2) and other greenhouse gasses, contributing to global warming.

As consumer and regulatory demands shift towards environmentally responsible alternatives, there is an increasing need for packaging materials that can meet or exceed the performance of conventional materials with a more environmentally friendly solution.

Microfibrillated cellulose (MFC) has emerged as a promising material in this regard due to its high strength, lightweight, and biodegradable characteristics. MFC is a versatile material derived from cellulose, the most abundant natural polymer on earth, and it has been explored in various applications ranging from paper products to high-performance composites. Despite the potential advantages of MFC, there are still challenges concerning its integration into commercially viable packaging products that can address the requirements of different packaging applications.

The present invention seeks to address the aforementioned challenges by providing a packaging composition that is derived from renewable resources and has a reduced environmental footprint.

A first object of the invention relates to a composition comprising:
- a nanocellulose material,
- a cellulose pulp fiber having an average fiber length less than 2 mm, and
- water.

Cellulose is a complex polysaccharide and the main constituent of plant cell walls, also found in certain algae and prokaryotic organisms. Cellulose is a linear biopolymer composed of glucose units linked together by β(1→4)-glycosidic bonds. These long linear chains of hundreds to thousands of glucose residues form microfibrils, which are the structural elements capable of binding to each other through multiple hydrogen bonds. This gives cellulose its great mechanical strength.

Nanocellulose material refers to a substance that comprises cellulose at the nanoscale, usually characterized by a high surface-area-to-volume ratio, high mechanical strength, flexibility, and a lightweight nature. This class of material is produced by breaking down cellulose fibers into nano-sized fibrils or particles.

Nanocellulose materials typically come in three main forms:
- Cellulose nanocrystals (CNCs): Also known as cellulose nanowhiskers, these are highly crystalline and rigid rod-like particles produced by removing the amorphous regions of cellulose fibers through processes like acid hydrolysis. They are noted for their excellent mechanical properties and ability to form liquid crystal structures.
- Cellulose nanofibrils (CNFs): Also referred to as nanofibrillated cellulose (NFC), these fibrils are produced by mechanically defibrillating cellulose fibers until they are only a few nanometers in diameter. Defibrillated cellulose refers to cellulose fibers that have been mechanically treated to partially or fully open up the fiber structure, exposing the microfibrils.
- Bacterial nanocellulose (BNC): This form is synthesized by certain bacteria that produce a pure cellulose material with a unique mesh-like structure. BNC has excellent water-holding capacity and is being explored for use in applications such as wound dressings and artificial skin in the medical field.

Microfibrillated Cellulose (MFC) is a form of nanocellulose and is commonly considered synonymous with CNF, as they both refer to the networks of cellulose fibrils produced by the mechanical defibrillation of cellulose fibers.

According to the present invention, the wording "nanocellulose material" refers to a cellulose material having a nano-structured fibrillar morphology. That is to say, cellulose fibrils having an average fiber length less than 100 nm.

Advantageously, the composition comprises between 0,1 and 30 weight% of dry matter, preferably between 0,5 and 15 weight%, more preferably between 1 and 10 weight%, the weight percentages being expressed with respect to the total weight of the composition.

It will be noted that in the context of the present application, and unless otherwise stipulated, the ranges of values indicated are understood to be inclusive.

Advantageously, the nanocellulose material is at an amount comprised between 45 and 99 weight%, preferably between 50 and 96 weight%, more preferably between 55 and 93 weight%, the weight percentages being expressed with respect to the dry weight of the composition.

Advantageously, the nanocellulose material is selected from the group consisting of cellulose nanocrystal (CNC), cellulose nanofibrils (CNF), bacterial cellulose (BNC), microfibrillated cellulose (MFC) and ground cellulose. Preferably, the nanocellulose material is selected from the group consisting of microfibrillated cellulose (MFC) and ground cellulose such as ground cellulose pulp.

According to one embodiment, the nanocellulose material is MFC.

According to another embodiment, the nanocellulose material is a ground cellulose derived from a cellulose pulp having an average fiber length less than 2 mm, preferably less than 1mm. This ground cellulose material has the advantages of sharing characteristics of both MFC and pulp, and is comprised of cellulose pulp fiber fragments, similar to 'fines material' common in pulping and papermaking. The ground cellulose material can be obtained by different grinding methods known by the skilled person. For example, the grinding can be achieved in a super mass collider, wet stirred media mills, mechanical disk grinder, counter rotor-rotor circular grinder, refiner or hammer mill. The cellulose can be pretreated via enzymatic, or chemical processes to control the fibrillation and reduce the energy requirements. An example of a chemical process is by tempo(2,2,6,6-Tetramethylpiperidin-1-yl)oxyl oxidation. Preferably, the ground cellulose material is obtained by wet stirred media milling or counter rotor-rotor circular grinding.

In the context of papermaking and manufacturing, pulp is a fibrous material derived primarily from wood, although other sources such as non-wood fibers and recycled paper products can also be used. The pulp is created through a mechanical or chemical process that breaks down the cellulose fibers of raw materials into a slurry, which can then be processed to form paper, paperboard, and other cellulose-based products.

Industrially, a distinction is often made between long fibers from softwood tree species, which will typically result in a pulp with an average fiber length of around 2 mm or more, and short fiber from hardwood, shrubs, straws, or other agricultural crops, which typically results in a pulp with an average fiber length less than 2 mm, and typically around 0.8-1.5 mm in length. Additionally, the cross diameter of the pulp fibers will vary according to the original physical and biological nature of the fiber cells in the respective biomass. Fiber length in non-wood sources is not related to fiber bundle length, as these fiber bundles are several fibers attached to each other to form long fibrous mechanical support in plants, such as in jute, sisal, and bamboo.

According to the present invention, "cellulose pulp fiber" refers to short pulp fiber that is to say to pulp comprising cellulose fibers having an average fiber length less than 2 mm, preferably less than 1.5 mm, even more preferably less than 1 mm.

Advantageously, the cellulose pulp fiber having an average fiber length less than 2 mm is a non-wood pulp, preferably the non-wood-pulp is selected from the group consisting of straw, grass and bamboo, more preferably the non-wood pulp is bamboo.

Advantageously, the cellulose pulp fiber is at an amount comprised between 1 and 20 weight%, preferably between 1.5 and 15 weight%, more preferably between 2 and 10 weight%, the weight percentages being expressed with respect to the dry weight of the composition.

According to one embodiment, the nanocellulose material is at an amount comprised between 45 and 99 weight%, and the cellulose pulp fiber is at an amount comprised between 1 and 20 weight%, the weight percentages being expressed with respect to the dry weight of the composition.

Advantageously, the composition further comprises a pigment at an amount comprised between 0.5 and 30 weight%, preferably between 1 and 25 weight%, more preferably between 1.5 and 20 weight%, the weight percentages being expressed with respect to the dry weight of the composition.

Advantageously, the ratio pigment/nanocellulose material is comprised between 0.01 and 0.45, preferably between 0.02 and 0.35, more preferably between 0.03 and 0.25, the weight percentages being expressed with respect to the dry weight of the composition.

Advantageously the pigment is selected from the group consisting of titanium dioxide, Calcium Carbonate (CaCO₃), China clay (kaolin), bentonite clay, cellulose white pigment and calcinated clay. Preferably, the pigment is titanium dioxide.

Advantageously, the composition further comprises one or more paper wet-strength agent.

"Wet-strength agents" are chemical additives used in the papermaking process to improve strength and dimensional stability in the presence of moisture. There are two main types of wet-strength agents: natural or synthetic. Synthetic wet-strength agents can include polyamideamine epichlorohydrin (PAE), polyacrylamide, and polyethyleneimine. Other compounds can be used as wet-strength agents, such as carboxylic acids having two or three carboxylic functions. For example adipic acid or citric acid.

Natural wet-strength agents are derived from natural sources such as starch, chitosan, chitin and natural latexes.

Advantageously, the one or more paper wet-strength agents is selected from the group consisting of citric acid, starch, polyamideamine epichlorohydrin (PAE), chitosan and a combination thereof.

Advantageously, the amount of the one or more paper wet-strength agent is comprised between 1 and 10 weight%, preferably between 1.5 and 8 weight%, more preferably between 2 and 6 weight%, the weight percentages being expressed with respect to the dry weight of the composition.

According to one embodiment, the composition comprises chitosan and/or chitin at an amount comprised between 1 and 30 weight%, preferably between 2 and 20 weight%, more preferably between 3 and 10 weight%, the weight percentages being expressed with respect to the dry weight of the composition.

Advantageously, the composition further comprises sorbitol and/or glycerol.

The amount of sorbitol and/or glycerol is comprised between 1 and 20 weight%, preferably between 2 and 17,5 weight%, more preferably between 3 and 15 weight%, the percentage being expressed with respect to the dry weight of the composition.

Advantageously, the composition further comprises sizing agent such alkyl ketene dimer (AKD). The amount of sizing agent is comprised between 1 and 5 weight%, preferably between 1,5 and 4,5 weight%, more preferably between 2 and 4 weight%, the percentage being expressed with respect to the dry weight of the composition.

Advantageously, the composition comprises:
- 45 to 99 weight% of a nanocellulose material, with respect to the dry weight of the composition,
- 1 to 20 weight% of cellulose pulp fiber having an average fiber length less than 2 mm, with respect to the dry weight of the composition,
- water,
- optionally 0.5 to 30 weight% of a pigment, with respect of the dry weight of the composition,
- optionally 1 to 10 weight% of a wet-strength agent, with respect of the dry weight of the composition,
- optionally 1 to 20 weight % of sorbitol and/or glycerol, with respect to the dry weight of the composition, and
- optionally 1 to 5 weight % of a sizing agent with respect to the dry weight of the composition.

A second object of the invention is a composition consisting of:
- a nanocellulose material,
- a cellulose pulp fiber having an average fiber length less than 2 mm,
- water,
- optionally a pigment,
- optionally a wet-strength agent
- optionally sorbitol and/or glycerol, and
- optionally a sizing agent.

A further object of the invention is a method for the preparation of the composition as above-defined, said method comprising the following steps:
- providing an aqueous suspension comprising the nanocellulose material
- dispersing the cellulose pulp fiber having an average fiber length less than 2 mm in the aqueous nanocellulose suspension,
- optionally, adding at least one compound selected from the group consisting of a pigment, a wet-strength agent, a sizing agent, sorbitol and/or glycerol, and a combination thereof.

The pigment, the wet-strength agent the sorbitol and/or glycerol, and the sizing agent are as previously defined.

The composition as defined above and/or as obtained by the method above, can be subjected to a drying step in order to be used as a coating.

Thus, a further object of the invention is a coating comprising or consisting of a composition as previously defined wherein the water content is comprised between 0.01 and 20 weight%, preferably between 0.5 and 16 weight%, more preferably between 1 and 12 weight%, the weight percentages being expressed with respect to the dry weight of the coating.

According to one embodiment, the coating comprises:
- one coating layer, said coating layer comprising a nanocellulose material, a cellulose pulp fiber having an average fiber length less than 2 mm, said coating layer optionally comprises:
   ∘ a pigment,
   ∘ sorbitol and/or glycerol,
and,
- optionally one surface coating layer;
wherein said coating is dispersible in water having a temperature of less than 60°C, preferably a water temperature comprised between 20°C and 60°C, more preferably between 25°C and 45°C.

The nano-cellulose material, the cellulose pulp fiber, the pigment, the sorbitol and/or glycerol are as previously defined.

By "under coating layer" it is meant a layer applied before the coating layer.

By "surface coating layer" it is meant a layer applied on the top of the coating layer.

By "dispersible" it is meant that the coating can be dispersed in the form of particles in or under the action of a solvent such as water.

Advantageously the surface coating is a varnish or an oil, preferably the surface coating is an acrylic varnish.

According to another embodiment, the coating comprises:
- optionally one undercoating layer selected from the group consisting of an acrylic varnish and a silicone lubricant, preferably an acrylic varnish, more preferably a matt acrylic varnish
- one coating layer, said coating layer comprising a nanocellulose material, a cellulose pulp fiber having an average fiber length less than 2 mm, pigment, sorbitol and/or glycerol, said coating layer optionally comprises:
   ∘ a wet strength agent, and
   ∘ a sizing agent,
- optionally one surface coating layer;
wherein said coating is peelable.

The nano-cellulose material, the cellulose pulp fiber, the pigment, the wet strength agent, the sizing agent, the sorbitol and/or glycerol are as previously defined.

Advantageously, the undercoating is dried or cured prior to being covered by the coating layer. The term "peelable" refers to the capacity of the coating to be removed from a surface without the need for tools or excessive force. Said peelable coating can be removed with water having a temperature of at least 10°C, preferably a temperature comprised between 10 and 100°C, more preferably between 10 and 90°C, and even more preferably between 10 and 80°C.

According to yet another embodiment, the coating comprises:
- one coating layer, said coating layer comprising a nanocellulose material, a cellulose pulp fiber having an average fiber length less than 2 mm, a pigment, a polymeric binding agent; said coating layer optionally comprises:
   ∘ a wet strength agent
   ∘ sorbitol and/or glycerol
- optionally one surface coating layer;
wherein said coating is a permanent coating.

The term "permanent coating" refers to a coating that cannot be removed easily and stays bound to a surface it is applied on for an extended period of time, until a specific method is used for its removal, such as an organic solvent or waterjet with a temperature of more than 60°C.

The nano-cellulose material, the cellulose pulp fiber, the pigment, the wet strength agent, the sorbitol and/or glycerol are as previously defined.

The polymeric binding agent is selected from the group consisting of starch, rubber, latex and polyvinyl alcohol (PVA). Preferably, the polymeric binding agent is PVA.

The amount of polymeric binding agent is comprised between 1 and 25 weight%, preferably between 2 and 20 weight%, more preferably between 3 and 15 weight%, the weight percentages being expressed with respect to the dry weight of the composition.

Advantageously, said permanent coating cannot be removed with water having a temperature less than 60°C.

Advantageously the surface coating is a varnish or an oil, preferably an oil.

A further object of the invention is a method for coating a surface, said method comprising the following steps:
a) optionally applying one undercoating layer
b) optionally drying the undercoating layer
c) providing the composition as defined above
d) heating the composition
e) applying a layer of the heated composition on a surface
f) drying the applied layer
g) obtaining a coating layer on the surface
h) optionally applying a surface coating layer
i) optionally drying the surface coating layer

Advantageously, in step d) the composition is heated at a temperature comprised between 20°C and 80°C, preferably between 25°C and 75°C, more preferably between 30°C and 70°C

Advantageously, in step d) the composition is heated for a time comprised between 0,1 and 5 min, preferably between 0,2 and 4 minutes, and more preferably between 0,3 and 3 minutes.

Advantageously, in step e), and optionally in steps a) and h) the layer is applied by a method chosen among spraying, printing, film depositing, curtain coating, vacuum infusion and dip-coating.
Preferably, the layer is applied by spraying.

Advantageously, in step f) and optionally in steps b) and i) the drying occurs at a temperature comprised between 20 and 200°C, preferably 30 and 180°C, and more preferably 40 and 160°C. Additionally, the drying time is dependent on the temperature and relative humidity but is comprised between 2 second and 60 minutes, preferably between 4 seconds and 40 minutes, more preferably between 6 seconds and 20 minutes.

A further object of the invention is an article coated with the coating as previously defined.

Advantageously, the article is at least partly coated with the coating of the invention.

According to one embodiment, the article is completely coated with the coating of the invention.

The coating of the present invention can be applied on a variety of articles that usually need a packaging or a label.

According to one embodiment, the article is a bottle such as a glass bottle.

In this embodiment, the coating replaces the sleeve, the seal or the shell of the bottle.

According to another embodiment, the article is a soap.

Other features and advantages of the invention will become apparent from the following examples, given by way of illustration.

### Example 1: preparation of the composition according to the invention

### a) Composition n°1 (Dispersible) with respect to the dry weight of the composition

### Materials:

- MFC: 1860g (10% solids in water, corresponding to 186g dry MFC)
- Titanium Dioxide (TiO2): 1g
- Bamboo Fibers: 8g
- Sorbitol: 5g

### Preparation Conditions:

The procedure was conducted at a room temperature of 20°C.

### Mixing Process:

### 1. Initial Mixture Composition:

Step 1: the dry components were first individually dissolved in 100g.
Step 2: the MFC suspension was further diluted by an addition of 1200g water
Step 3: the dissolved dry components obtained in step 1, (bamboo fibers, sorbitol, and TiO2) were added to the MFC suspension obtained in step 2.

This mixture resulted in a total dry weight of 200g.

### 2. Addition of Water:

An additional 626g of water was incorporated into the mixture to adjust the viscosity for spraying.

### 3. Homogenization:

The combined materials were homogenized using a high-speed propeller mixer.

The final formulation resulted in a total volume of 4000g, comprising 95% water.

### b) Composition n°2 (Peelable) with respect to the dry weight of the composition

### Materials:

- MFC: 1200g (10% solids in water, corresponding to 120g dry MFC)
- Titanium Dioxide (TiO2): 20g
- Bamboo Fibers: 30g
- Sorbitol: 20g
- Citric Acid: 4g
- Starch: 6g

### Preparation Conditions:

The procedure was conducted at a room temperature of 20°C.

### Mixing Process:

### 1. Initial Mixture Composition:

Step 1: the dry components were first individually dissolved in 100g.
Step 2: the MFC suspension was further diluted by an addition of 2000g water
Step 3: the dissolved dry components obtained in step 1, (bamboo fibers, citric acid, sorbitol, and TiO2) were added to the MFC suspension obtained in step 2.

This mixture resulted in a total dry weight of 200g.

### 2. Addition of Water:

An additional 720g of water was incorporated into the mixture to adjust the viscosity for spraying.

### 3. Homogenization:

The combined materials were homogenized using a high-speed propeller mixer.

The final formulation resulted in a total volume of 4000g, comprising 95% water.

### c) Composition n°3 (Permanent) with respect to the dry weight of the composition

### Materials:

- MFC: 1200g (10% solids in water, corresponding to 140g dry MFC)
- Titanium Dioxide (TiO2): 20g
- Bamboo Fibers: 20g
- PVA: 20g

### Preparation Conditions:

The procedure was conducted at a room temperature of 20°C.

### Mixing Process:

### 1. Initial Mixture Composition:

Step 1: the dry components were first individually dissolved in 100g.
Step 2: the MFC suspension was further diluted by an addition of 2000g water.
Step 3: the dissolved dry components obtained in step 1, (bamboo fibers, PVA and TiO2) were added to the MFC suspension obtained in step 2.

This mixture resulted in a total dry weight of 200g.

### 2. Addition of Water:

An additional 720g of water was incorporated into the mixture to adjust the viscosity for spraying.

### 3. Homogenization:

The mixture was homogenized using a high-speed propeller mixer.

The final formulation resulted in a total volume of 4000g, comprising 95% water.

### Example 2: coating according to the invention

**Table 1: Coating A, B, C according to the invention**

| | A | B | C |
|---|---|---|---|
| Under coat | - | Matt varnish 100% | - |
| Composition 1 | X | - | - |
| Composition 2 | - | X | - |
| Composition 3 | - | - | X |
| Top coat | - | Glossy varnish 100% | Matt top-oil100% |

### According to example A from Table 1.

Composition n°1 detailed above, is heated to 70 °C, and then sprayed at a pressure of 5 bar with a nozzle of 1.4 mm onto a soap, covering as much as is desired for a given effect. The soap is then allowed to dry in a forced air dryer at 50 °C for 1 hour.

### According to example B from Table 1.

Matt acrylic varnish (Montana Tech, T1010 matt varnish) is sprayed over the desired areas of a bottle. The bottle is then allowed to dry in a forced air dryer at 50 °C for 0.51 hour.

Composition n°2 detailed above, is heated to 70 °C, and then sprayed at a pressure of 5 bar with a nozzle of 1.4 mm onto the bottle, covering as much as is desired for a given effect. The bottle is then allowed to dry in a forced air dryer at 50 °C for 1 hour.

Lastly, a layer of acrylic varnish (Montana Tech, T1000 glossy varnish) is sprayed on top of the dried Composition n°2 layer on the bottle, covering the areas sprayed previously.

### According to example C from Table 1.

Composition n°3 detailed above, is heated to 70 °C, and then sprayed at a pressure of 5 bar with a nozzle of 1.4 mm onto the bottle, covering as much as is desired for a given effect. The bottle is then allowed to dry in a forced air dryer at 50 °C for 1 hour.

Lastly, a layer of industrially available matt top-oil (Osmo Top-Oil 3068 Nature Matt) is sprayed or printed on top of the dried Composition n°1 layer on the bottle, covering the areas sprayed previously.

### Results and technical effects

Drying of nanocellulose fibrils into a coherent film is technically challenging, and has only been described in the literature for films from casting or on smooth surfaces. Drying on irregular surfaces or objects has not been achieved so far. When drying a pure nanocellulose fibrillar dispersion in water, the capillary and tensional forces during drying are too strong, resulting in cracking of the forming nanocellulose fibril film.

The inventors have overcome this by fortifying the nanocellulose film with the cellulose pulp fibers of the invention that are able to span the forming film during drying, bridging areas that would otherwise crack. This gives to the composition and coating of the invention the ability to bridge gaps up to 2 mm.

Moreover, the invention has highlighted that the MFC does not adhere to glass on its own, and that the addition of a polymeric bonding agent such as PVA, natural rubber latex or starch, has the ability of retaining the composition on a glass surface while drying. Additional, once dried, the polymeric bonding agent has the ability of creating a film that retains the dried coating layer on the object that it is applied to.

Moreover, the inventors have highlighted that the addition of titanium dioxide or similar pigment such as calcium carbonate (CaCO3), China clay (kaolin), bentonite clay, and calcinated clay, has the ability to reduce the layer thickness needed to achieve a targeted occlusion, and subsequently significantly helps the film formation during drying.

Additionally, when using the coating to replace the effect of a plastic film in a shrink sleeve, the coating can smoothly accommodate irregular surfaces not possible with a shrinking plastic film.

Additionally, the resulting surface of the coating can be printed with any standard paper inks, in a direct-to-object process, such as inkjet or heat transfer.

Moreover, the coating can be formulated in such a way that it is possible to remove it from the surface of an object, allowing for the object to either be unpacked to presented, or alternatively potentially reused after washing. Followed by potential re-coating with the invention, allowing for reuse of a container or object.

Lastly, the resulting coating can be fossil plastic free, not giving rise to any non-biodegradable microparticles should it degrade in contact with the natural environment. Additionally, the use of mainly bio-based components, results in a significantly lower carbon footprint of the process and the material compared to classical fossil-based solutions.

## Claims

1. A composition comprising:
- a nanocellulose material,
- a cellulose pulp fiber having an average fiber length less than 2 mm; and
- water.

2. The composition according to claim 1, wherein the nanocellulose material is at an amount comprised between 45 and 99 weight %, and the cellulose pulp fiber is at an amount comprised between 1 and 20 weight %, the weight percentages being expressed with respect to the dry weight of the composition.

3. The composition according to claim 1 or 2, wherein the nanocellulose material is microfibrillated cellulose (MFC).

4. The composition according to any one of claims 1 to 3, wherein the nanocellulose compound is a ground cellulose derived from a cellulose pulp having an average fiber length less than 2 mm.

5. The composition according to any one of claims 1 to 4, further comprising a pigment at an amount comprised between 0.5 and 30 weight % with respect to the dry weight of the composition.

6. The composition according to claim 5, wherein the pigment is selected from the group consisting of titanium dioxide, calcium carbonate (CaCO₃), China clay (kaolin), bentonite clay, and calcinated clay.

7. The composition according to any one of claims 1 to 6, further comprising one or more paper wet-strength agent selected from the group consisting of citric acid, starch, polyamideamine epichlorohydrin (PAE), chitosan and a combination thereof, at an amount comprised between 1 to 10 weight % with respect to the dry weight of the composition.

8. The composition according to any one of claims 1 to 7, further comprising chitosan and/or chitin at an amount comprised between 1 to 30 weight% with respect to the dry weight of the composition.

9. Composition consisting of:
- a nanocellulose material,
- a cellulose pulp fiber having an average fiber length less than 2 mm,
- water,
- optionally a pigment,
- optionally a wet-strength agent,
- optionally a sizing agent, and
- optionally sorbitol and/ or glycerol.

10. Coating comprising or consisting of a composition according to any one of claims 1 to 9 wherein the water content is comprised between 0 and 20 weight% with respect to the dry weight of the coating.

11. Coating according to claim 9 comprising:
- one coating layer, said coating layer comprising a nanocellulose material, a cellulose pulp fiber having an average fiber length less than 2 mm, said coating layer optionally comprises:
- a pigment;
- sorbitol and/or glycerol,
and,
- optionally one surface coating layer;
wherein said coating is dispersible in water having a temperature of less than 60°C.

12. Coating according to claim 10 comprising:
- optionally one undercoating layer selected from the group consisting of an acrylic varnish and a silicone lubricant, preferably an acrylic varnish, more preferably a matt acrylic varnish;
- one coating layer, said coating layer comprising a nanocellulose material, a cellulose pulp fiber having an average fiber length less than 2 mm, pigment, sorbitol and/or glycerol, said coating layer optionally comprises:
- a wet strength agent,
- a sizing agent;
and,
- optionally one surface coating layer;
wherein said coating is peelable.

13. Coating according to claim 10 comprising:
- one coating layer, said coating layer comprising a nanocellulose material, a cellulose pulp fiber having an average fiber length less than 2 mm, a pigment, , a polymeric binding agent; said coating layer optionally comprises :
- a wet strength agent,
- sorbitol and/or glycerol,
and
- optionally one surface coating layer;
wherein said coating is a permanent coating.

14. Method for coating a surface comprising the following steps:
a) optionally applying one undercoating layer
b) optionally drying the undercoating layer
c) providing the composition as defined in claims 1 to 9
d) heating the composition
e) applying a layer of the heated composition on a surface
f) drying the sprayed layer
g) obtaining a coating layer on the surface
h) optionally applying a surface coating layer.
i) optionally drying the surface coating layer

15. Article coated with the coating as defined in any one of claims 10 to 13.

16. Article according to claim 15 wherein the article is a bottle.

17. Article according to claim 15 wherein the article is a soap.
